# EUROPÄISCHE PATENTANMELDUNG

(11) **EP 1 093 313 A2**
(43) Veröffentlichungstag der Anmeldung: **18.04.2001**
(21) Anmeldenummer: 00440246.7
(22) Anmeldetag: 15.09.2000
(51) Int. Cl.: H04Q 3/00, H04Q 11/04

(54) **Verfahren zur Übermittlung von Dienst-Signalisierungsnachrichten, Vermittlungsstelle, Konvertierungsknoten und Dienststeuerungsknoten**

(30) Priorität: 13.10.1999 DE 19949316
(71) Anmelder: ALCATEL, 75008 Paris (FR)
(72) Erfinder: Webel, Thilo, 75175 Pforzheim (DE); Müller, Frank, 71229 Leonberg (DE); Kaiser, Bernhard, Dr., 71665 Vaihingen/Enz (DE)
(74) Vertreter: Brose, Gerhard, Dipl.-Ing.

(57) **Zusammenfassung**

Die vorliegende Erfindung betrifft ein Verfahren, eine Vermittlungsstelle, einen Konvertierungsknoten und einen Dienststeuerungsknoten zur Übermittlung von Dienst-Signalisierungsnachrichten. Dabei werden Dienst-Signalisierungsnachrichten über ein Signalisierungsnetz zwischen Vermittlungsstellen (SW1, SW2, SW3, SW6) in Sequenzen übertragen. Die Dienst-Signalisierungsnachrichten werden jeweils anhand einer Zielkennung von einer Ursprungs-Vermittlungsstelle zu einer Ziel-Vermittlungsstelle geleitet und ein Konvertierungsknoten (CP) ermittelt nötigenfalls eine der Teilnehmerkennung zugeordnete portierte Teilnehmerkennung. Es wird vorgeschlagen, dass die Ursprungs-Vermittlungsstelle eine portierte Teilnehmerkennung ermittelt und in diejenigen Signalisierungsnachrichten als Zielkennung einträgt, welche die Ursprungs-Vermittlungsstelle innerhalb einer Sequenz aus Signalisierungsnachrichten anschliessend an eine erste Signalisierungsnachricht versendet.

## Beschreibung

Die vorliegende Erfindung betrifft ein Verfahren gemäss dem Oberbegriff des Anspruchs 1, sowie eine Vermittlungsstelle gemäss dem Oberbegriff des Anspruchs 7 hierfür, einen Konvertierungsknoten gemäss dem Oberbegriff des Anspruchs 8 hierfür und einen Dienststeuerungssknoten gemäss dem Oberbegriff des Anspruchs 9 hierfür.

Die Erfindung geht von der üblichen Übermittlung von Dienst-Signalisierungsnachrichten im CCITT Signalisierungssystem Nr. 7 aus.

Zur Bereitstellung von speziellen ISDN-Diensten (ISDN = Integrated Services Digital Network) senden sich Vermittlungsstellen eines Kommunikationsnetzes Dienst-Signalisierungsnachrichten über das Signalisierungsnetz zu. Bei diesen Dienst-Signalisierungsnachrichten handelt es sich um Nachrichten des SCCP Protokolls (SCCP = Signalling Connection Control Part). Um Dienst-Signalisierungsnachrichten an eine Zielvermittlungsstelle zu übertragen, trägt eine Ursprungsvermittlungsstelle einen sogenannten Global Title, bei dem es sich um die Rufnummer eines Teilnehmers der Zielvermittlungsstelle handelt, als Zielkennung in die Dienst-Signalisierungsnachrichten ein. Die Dienst-Signalisierungsnachrichten werden anschliessend zu einem speziellen Signalisierungsknoten des Kommunikationsnetzes geleitet. Dieser Signalisierungsknoten ergänzt dann den Global Title durch den sogenannten Signalling Point Code (SPC), bei dem es sich um die Adresse der Zielvermittlungsstelle innerhalb des Signalisierungsnetzes handelt. Gemäss dieser Adresse werden die Dienst-Signalisierungsnachrichten dann durch das Signalisierungsnetz zu der Zielvermittlungsstelle geleitet.

Ist jedoch ein Teilnehmer mit seiner Rufnummer "umgezogen", d.h. unter seiner gleichbleibenden "persönlichen" Rufnummer nicht mehr über die Vermittlungsstelle seines bisherigen Aufenthaltsortes sondern über eine Vermittlungsstelle seines neuen Aufenthaltsortes erreichbar, so wird zum Aufbau von Nutzkanalverbindungen zu der Vermittlungsstelle seines neuen Aufenthaltsortes eine sogenannte Portierungs-Datenbank eingesetzt, in der zu der portierten Rufnummer des Teilnehmers ausserdem Zielkennungen zu der Vermittlungsstelle seines neuen Aufenthaltsortes abgelegt sind. Auch in Dienst-Signalisierungsnachrichten bezüglich des Teilnehmers, die zur Erbringung von speziellen ISDN-Diensten zu übermitteln sind, wird bei einer solchen Portierung nicht mehr der Global Title aus dem Anschlussbereich der Vermittlungsstelle seines bisherigen Aufenthaltsortes sondern der Global Title aus dem Anschlussbereich der Vermittlungsstelle seines neuen Aufenthaltsortes eingetragen. Dazu kann gemäss der Deutschen Patentanmeldung DE19805686.9 (internes Aktenzeichen: 1 10922) vorteilhaft ebenfalls die erwähnte Portierungs-Datenbank eingesetzt werden. Eine Dienst-Signalisierungsnachricht, die eine Teilnehmerkennung als Zielkennung enthält, wird dabei zu einem Konvertierungsknoten geleitet. Der Konvertierungsknoten ersetzt im Falle einer Portierung der Teilnehmerkennung die Teilnehmerkennung durch die zugeordnete portierte Teilnehmerkennung und greift dabei auf die beim Verbindungsaufbau eines Nutzkanals verwendete Portierungs-Datenbank zu. Sofern es sich nur um eine einzelne, auf diese Weise zu bearbeitende Dienst-Signalisierungsnachricht handelt, ist eine solche Konvertierung problemlos zu handhaben. Sind jedoch mehrere Dienst-Signalisierungsnachrichten innerhalb einer Sequenz zu versenden, ist es sehr zeitaufwendig und erfordert eine hohe Rechnerleistung, für jede Dienst-Signalisierungsnachricht auf die Portierungs-Datenbank zuzugreifen. Ausserdem müssen bei einem solchen Vorgehen alle Dienst-Signalisierungsnachrichten ausnahmslos umständlich zu dem Konvertierungsknoten geleitet werden, weil die Dienst-Signalisierungsnachrichten nur so an das portierte Ziel umgeleitet werden können.

Der Erfindung liegt demnach die Aufgabe zugrunde, die Erbringung von Telekommunkationsdiensten zu verbessern, bei denen eine Übermittlung von Dienst-Signalisierungsnachrichten für portierte Rufnummern notwendig ist.

Diese Aufgabe wird durch ein Verfahren gemäss der technischen Lehre des Anspruchs 1, sowie eine Vermittlungsstelle gemäss der technischen Lehre des Anspruchs 7, einen Konvertierungsknoten gemäss der technischen Lehre des Anspruchs 8 und einen Dienststeuerungssknoten gemäss der technischen Lehre des Anspruchs 9 gelöst. Weitere vorteilhafte Ausgestaltungen der Erfindung sind den abhängigen Ansprüchen und der Beschreibung zu entnehmen.

Der Erfindung liegt hierbei der Gedanke zugrunde, dass aufgrund von geographisch-bedingten oder Netzbetreiber-bedingten Portierungen von Teilnehmerrufnummern das Routing von Dienst-Signalisierungsnachrichtensequenzen derart optimiert werden kann, dass nur für die jeweils erste Dienst-Signalisierungsnachricht einer Dienst-Signalisierungsnachrichtensequenz durch Zugriff auf eine Portierungs-Datenbank eine zu einer bisherigen Teilnehmerkennung gehörige portierte Teilnehmerkennung ermittelt wird. Die Ursrprungsvermittlungstelle, welche die Dienst-Signalisierungsnachrichtensequenz versendet, speichert dann die portierte Teilnehmerkennung und trägt sie in alle Dienst-Signalisierungsnachrichten innerhalb der Dienst-Signalisierungsnachrichtensequenz ein, die die Ursrprungsvermittlungstelle anschliessend an die erste Dienst-Signalisierungsnachricht an eine Zielvermittlungstelle versendet. Durch die Speicherung der portierten Teilnehmerkennung in der Ursrprungsvermittlungstelle ist der zeit- und rechenleistungsintensive Zugriff auf die Portierungs-Datenbank nur einmal pro Dienst-Signalisierungsnachrichtensequenz erforderlich.

Die portierte Teilnehmerkennung kann die Ursrprungsvermittlungstelle vorteilhaft bei einer Portierungs-Datenbank oder einem Konvertierungsknoten mit einer Portierungs-Datenbank abfragen.

Es ist in einer bevorzugten Variante der Erfindung möglich, dass die Ursrprungsvermittlungstelle eine erste Dienst-Signalisierungsnachricht einer Dienst-Signalisierungsnachrichtensequenz an einen Konvertierungsknoten sendet und dieser dann durch Zugriff auf eine Portierungs-Datenbank die portierte Teilnehmerkennung ermittelt. Die Dienst-Signalisierungsnachrichtensequenz wird dann bis zu einer durch die portierte Teilnehmerkennung adressierten Zielvermittlungstelle weitergesendet. Die Zielvermittlungstelle antwortet dann der Ursrprungsvermittlungstelle mit einer Antwort-Dienst-Signalisierungsnachricht, aus der die Ursrprungsvermittlungstelle die portierte Teilnehmerkennung zur späteren Verwendung in weiteren Dienst-Signalisierungsnachrichten der Dienst-Signalisierungsnachrichtensequenz ermitteln kann. Diese weiteren Dienst-Signalisierungsnachrichten können anhand ihrer nunmehr aktuell gültigen portierten Teilnehmerkennung entweder direkt zu der Zielvermittlungstelle übertragen werden, oder aber weiterhin über den Konvertierungsknoten. In einer erfindungsgemässen Ausführung kann der Konvertierungsknoten jedoch erkennen, wenn eine Dienst-Signalisierungsnachricht eine einer ersten Dienst-Signalisierungsnachricht folgende Dienst-Signalisierungsnachricht ist und bereits eine portierte, aktuell gültige Teilnehmerkennung enthält. In diesem Fall verzichtet der erfindungsgemässe Konvertierungsknoten auf den zeit- und rechenleistungsintensiven Zugriff auf die Portierungs-Datenbank.

Aufgrund der Erfindung werden Sequenzen aus Dienst-Signalisierungsnachrichten korrekt und dabei besonders effizient übermittelt. Eine Veränderung der Dienstelogik ist für die Erbringung der Dienste nicht erforderlich. Die erfindungsgemässe Lösung ist weiter kostengünstig und mit geringem Aufwand in existierende Vermittlungssysteme integrierbar, weil keine Änderungen des Signalisierungsnetzes oder von Komponenten des Signalisierungsnetzes notwendig sind. Der Konvertierungsknoten ist besonders kostengünstig realisierbar, da er zur Realisierung seiner Funktion auf für einen anderen Zweck bereits existierende Komponenten, nämlich die Portierungs-Datenbank, zurückgreift und zusätzlich im Wesentlichen nur eine Prüffunktion aufweisen muss, die zwischen einer ersten Dienst-Signalisierungsnachricht und dieser ersten Dienst-Signalisierungsnachricht folgenden Dienst-Signalisierungsnachricht unterscheiden kann.

Die Anwendung der Erfindung ist insbesondere vorteilhaft in einer Netzumgebung, in der Kommunikationsnetze verschiedener, konkurrierender Netzbetreiber nebeneinander existieren und in der die Forderung der Rufnummernportabilität existiert. Ein weiterer vorteilhafter Anwendungsfall ist der eines Kommunikationsnetzes, in der die Forderung der Rufnummernportabilität zwischen verschiedenen Teilnehmervermittlungsstellen besteht.

Im folgenden werden die Erfindung und ihre Vorteile anhand eines Ausführungsbeispiels unter Zuhilfenahme der Zeichnungen dargestellt.
- Figur 1: zeigt eine funktionelle Darstellung eines Kommunikationssystems zur Ausführung des erfindungsgemässen Verfahrens mit einer erfindungsgemässen Vermittlungsstelle SW1 sowie einem erfindungsgemässen Konvertierungsknoten CP und einem erfindungsgemässen Dienststeuerungsknoten SCP.
- Figur 2: zeigt ein Ablaufdiagramm einer Übermittlung von Dienst-Signalisierungsnachrichten gemäss eines ersten Ausführungsbeispiels.

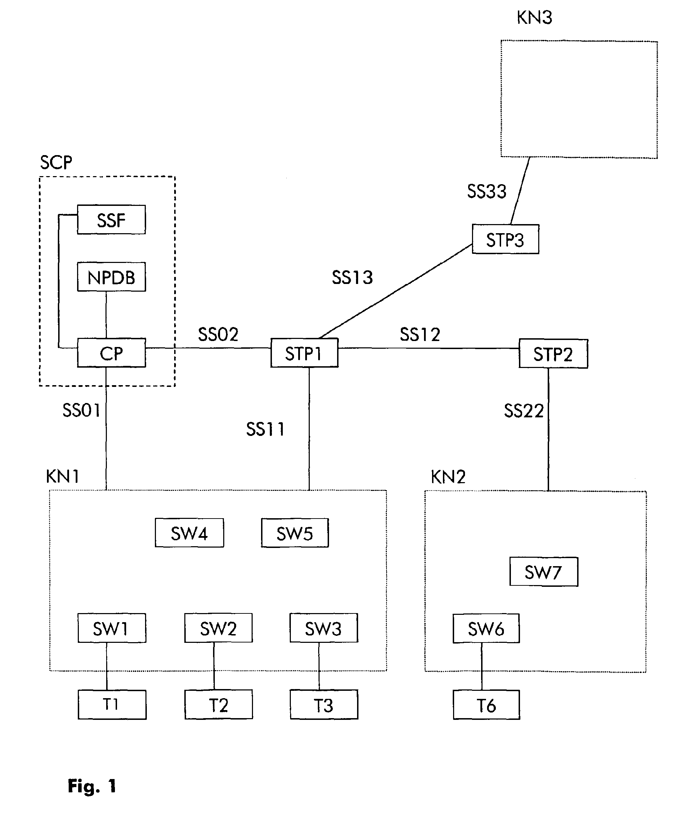

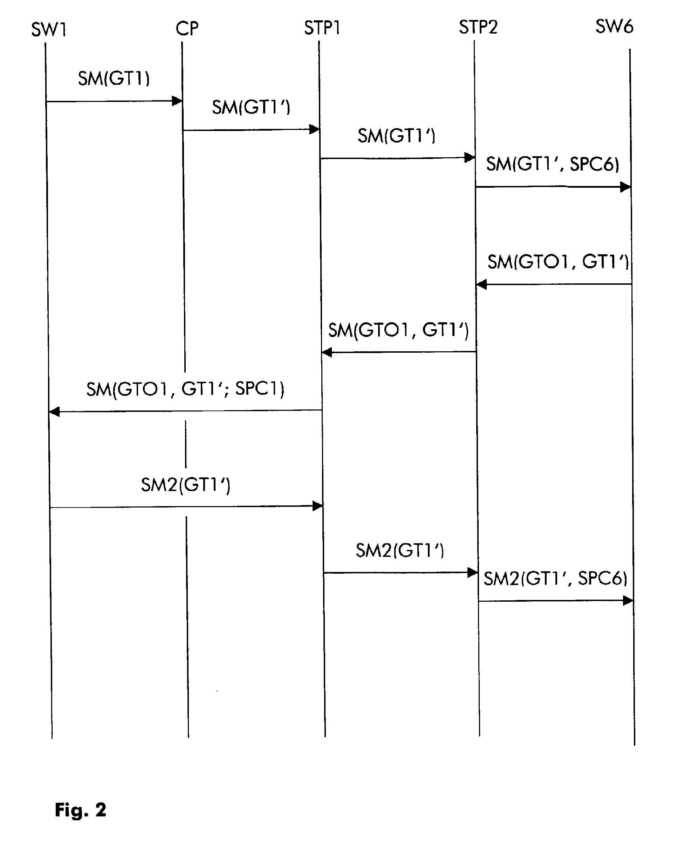

Anhand von Figur 1 und Figur 2 wird im folgenden ein erstes Ausführungsbeispiel der Erfindung erläutert.

Figur 1 zeigt ein Kommunikationssystem mit drei Kommunikationsnetzen KN1, KN2 und KN3, vier Endgeräten T1, T2, T3 und T6, drei Signalisierungsknoten STP1, STP2 und STP3 und einen Dienststeuerungsknoten SCP mit einem Konvertierungsknoten CP, einer Datenbank NPDB und einem Funktionsblock SSF. Zwischen den Signalisierungsknoten STP1, STP2 und STP3, dem Konvertierungsknoten CP und den Kommunikationsnetzen KN1, KN2 und KN3 werden Dienst-Signalisierungsnachrichten gesendet. Dazu werden Signalisierungsverbindungen SS01, SS11, SS02, SS13, SS12, SS33 und SS22 verwendet.

Die Kommunikationsnetze KN1, KN2 und KN3 sind vorzugsweise Fernsprechnetze, z.B. ISDN-Netze (ISDN = Integrated Services Digital Network), die verschiedenen Netzbetreibern zugeordnet sind, die sich einen gemeinsamen Nummerierungsbereich teilen. Die KN1, KN2 und KN3 können jedoch auch insofern unterschiedlich sein, als beispielsweise das Kommunikationsnetz KN1 ein ISDN-Netz und das Kommunikationsnetz KN2 ein Mobilfunknetz, z.B. nach dem GSM Standard, ist, während es sich bei dem Kommunikationsnetz KN3 um ein breitbandiges Kommunikationsnetz handelt, das neben der Sprach- auch eine Bildkommunikation zwischen den Teilnehmern ermöglicht. Weiter ist Rufnummernportabilität zwischen Teilnehmern dieser Kommunikationsnetze möglich. Die Anzahl der Kommunikationsnetze KN1, KN2 und KN3 ist hierbei beispielhaft gewählt. Die Endgeräte T1, T2, T3 und T6 sind für den Anschluss an die Kommunikationsnetze KN1, KN2 und KN3 geeignete Endgeräte, beispielsweise ISDN-Fernsprechgeräte, Faxgeräte oder Computer.

Die Kommunikationsnetze KN1, KN2 und KN3 weisen jeweils mehrere Vermittlungsstellen auf, von denen in Fig. 1 beispielhaft die Vermittlungsstellen SW1, SW2, SW3, SW4 und SW5 des Kommunikationsnetzes KN1 sowie die Vermittlungsstellen SW6 und SW7 des Kommunikationsnetzes KN2 gezeigt sind. Die Vermittlungsstellen SW1, SW2, SW3 und SW6 stellen hierbei Teilnehmervermittlungsstellen dar, an die die Endgeräte T1, T2, T3 bzw. T6 angeschlossen sind. Die Vermittlungsstellen SW4, SW5 und SW7 stellen Transitvermittlungsstellen dar.

Die Vermittlungsstellen SW1, SW2, SW3, SW4 und SW5 des Kommunikationsnetzes KN1 sind untereinander hierarchisch über Nutzkanäle verbunden, wobei die Teilnehmeranschlussvermittlungsstellen SW1 bis SW3 die untere und die Transitvermittlungsstelle SW4 und SW5 die obere Hierarchieebene darstellen. Weiter sind die Vermittlungsstellen untereinander über Signalisierungskanäle verbunden, über die Signalisierungsnachrichten zwischen den Vermittlungsstellen ausgetauscht werden. Das so gebildete Signalisierungsnetz entspricht hierbei beispielsweise dem CCITT Signalisierungssytem Nr. 7 und enthält neben den Vermittlungsstellen auch Signalisierungspunkte, die auch als Signalling Transfer Points (STP) bezeichnet werden. Diese Signalisierungspunkte führen unter anderem die Vermittlung der über das Signalisierungsnetz übertragenen Signalisierungsnachrichten durch. Innerhalb des Signalisierungsnetzes besteht hierbei ein eigenes Adressierungsschema. Signalisierungsnachrichten werden von den Signalisierungsknoten gemäss einer Vermittlungsstellen-Kennung, dem sogenannten Signalling Point Code, vermittelt.

Die Vermittlungsstellen der Kommunikationsnetze KN2 und KN3 sind auf dieselbe Weise wie die des Kommunikationsnetzes KN1 miteinander verbunden. Weiter sind die Kommunikationsnetze KN1, KN2 und KN3 untereinander über Nutzkanalbündel verbunden. Diese Nutzkanalbündel verbinden hierbei jeweils zwei Transitvermittlungsstellen, eine des einen Kommunikationsnetzes und eine des anderen Kommunikationsnetzes. Auch die Signalisierungsnetze der Kommunikationsnetze KN1, KN2 und KN3 sind miteinander verbunden und bilden ein gemeinsames Signalisierungsnetz. Diese Verknüpfung erfolgt durch Verknüpfung von Signalisierungsknoten der einzelnen Kommunikationsnetze über Signalisierungskanäle.

Die Signalisierungsknoten STP1, STP2 und STP3 stellen besonders ausgestaltete Signalisierungsknoten des gemeinsamen Signalisierungsnetzes der Kommunikationsnetze KN1, KN2 und KN3 dar. Diese Signalisierungsknoten sind in der Lage, eine Teilnehmerkennung, die als Zieladresse in einer Dienst-Signalisierungsnachricht eingetragen ist, in die Vermittlungsstellen-Kennung der dieser Teilnehmerkennung zugeordneten Vermittlungsstelle umzusetzen, also in das interne Adressierungsschema des Signalisierungsnetzes. Ein solcher Signalisierungsknoten wird auch aus Signalling Relay Point bezeichnet.

In der Datenbank NPDB sind Portierungsdaten gespeichert, die Datenbank NPDB stellt somit eine Portierungs-Datenbank dar. Diese Portierungsdaten weisen speziellen Teilnehmerkennungen eine Portierungskennung zu. Die speziellen Teilnehmerkennungen sind hierbei die Teilnehmerkennungen, beispielsweise die Rufnummern, derjenigen Teilnehmer, die nicht über ein an das Kommunikationsnetz KN1 angeschlossenes Endgerät erreichbar sind, sondern über ein an eines der übrigen Kommunikationsnetze KN2 oder KN3 angeschlossenes Endgerät erreichbar sind. Als Portierungskennung ist dann jeweils eine Kennung desjenigen Kommunikationsnetzes zugeordnet, über das der Teilnehmer erreichbar ist. Es ist auch möglich, dass als Portierungskennung eine Kennung der Teilnehmervermittlungsstelle zugeordnet ist, über die der Teilnehmer erreichbar ist.

Eine weitere Möglichkeit besteht darin, dass bestimmte Zahlenbereiche der Teilnehmerkennung jeweils für bestimmte Kommunikationsnetze reserviert sind. Ist ein Teilnehmer nicht an ein dem Zahlenbereich seiner Teilnehmerkennung entsprechendes Kommunikationsnetz angeschlossen, so ist seiner Teilnehmerkennung in der Datenbank NPDB eine Portierungskennung zugeordnet, die auf dasjenige Kommunikationsnetz verweist, unter dem er erreichbar ist.

Die Datenbank NPDB kann, wie in Figur 1 gezeigt, auf derselben Rechnerplattform wie der Funktionsblock SSF des Dienststeuerungsknotens SCP aufsetzen, der gleichzeitig die Rechnerplattform des Konvertierungspunkts CP ist. Es sind jedoch auch separate, eigenständige Rechnerplattformen möglich.

Der Dienststeuerungsknoten SCP kommuniziert mit einer oder mehreren speziell ausgestalteten Vermittlungsstellen des Kommunikationsnetzes KN1 über das Signalisierungsnetz. Diese Vermittlungsstellen weisen eine sogenannte Service-Switching-Funktionalität auf und entsprechen ebenso wie der Dienststeuerungsknoten SCP in ihrer Funktionalität den Spezifikationen der IN Architektur (IN = Intelligent Network, siehe beispielsweise ITU-T Recommendation Q.1215). Der Dienststeuerungsknoten verfügt hierbei über eine Dienstelogik, die mittels Zugriff auf die Portierungs-Datenbank NPDB im Kommunikationsnetz KN1 folgenden Portierungsdienst für den Aufbau von Nutzkanalverbindungen bereitstellt:

Beim Verbindungsaufbau einer Nutzkanalverbindung entnimmt eine Vermittlungsstelle die gerufene Rufnummer als Teilnehmerkennung des gerufenen Teilnehmers der Verbindungsanforderungs-Nachricht und transportiert sie als Nutzlast in einer IN-Signalisierungsnachricht INAPM zum Dienststeuerungsknoten SCP. Der Dienststeuerungsknoten SCP greift auf die Datenbank NPDB zu und ermittelt, ob es sich um eine portierte Teilnehmerkennung handelt. Handelt es sich um eine solche, so meldet er die zugeordnete Portierungskennung als Nutzlast einer IN-Signalisierungsnachricht INAPM an die Vermittlungsstelle zurück. Diese stellt dann die Portierungskennung der Teilnehmerkennung voran und der Nutzkanal wird gemäss dieser so erweiterten Teilnehmerkennung aufgebaut.

Der Konvertierungsknoten CP dient der Konvertierung der Zielkennungen, also der Zieladressen, von Dienst-Signalisierungsnachrichten. Solche Dienst-Signalisierungsnachrichten werden zwischen Vermittlungsstellen der Kommunikationsnetze KN1, KN2 und KN3 ausgetauscht und dienen der Steuerung von Telekommunikationsdiensten, die von den Kommunikationsnetzen KN1, KN2 und KN3 erbracht werden. Beispiele solcher Dienste werden im folgenden erläutert.

Ein erstes Beispiel ist der sogenannte "Rückruf-bei-Besetzt" Dienst (Call Completion on Busy Subscriber = CCBS). Dieser Dienst kann aktiviert werden, wenn ein gerufener Teilnehmer besetzt ist. Wird der Dienst vom rufenden Teilnehmer aktiviert, so sendet die Dienstlogik in der Vermittlungsstelle des gerufenen Teilnehmers der Vermittlungsstelle des rufenden Teilnehmer eine Dienst-Signalisierungsnachricht zu, wenn der gerufene Teilnehmer nicht mehr besetzt ist. Ein anderer Dienst ist der sogenannte Short-Message Service (SMS). In diesem Fall sendet eine Vermittlungsstelle eine Dienst-Signalisierungsnachricht mit einer kurzen Textnachricht an eine andere Vermittlungsstelle, die diese Nachricht sodann an das Endgerät eines an sie angeschlossenen Teilnehmers weitersendet.

In diesen Beispielen werden die Dienst-Signalisierungsnachrichten über das SCCP Protokoll des Signalisierungssystems Nr. 7 ausgetauscht. Von der Ursprungsvermittlungsstelle wird als Zielkennung in die Dienst-Signalisierungsnachricht SM(GT1) eine Teilnehmerkennung GT (GT = Global Title) eines Teilnehmers der Zielvermittlungsstelle eingetragen. Der Konvertierungsknoten CP liest die Zielkennung, bei der es sich um die Teilnehmerkennung GT handelt, aus der Signalisierungsnachricht SM(GT1) aus und überprüft mittels Zugriff auf die Datenbank NPDB, ob diese portiert ist und ihr somit eine Portierungskennung zugeordnet ist. Ist dies der Fall, so ermittelt er mittels Zugriff auf die Datenbank NPDB die zugeordnete portierte Teilnehmerkennung GT' und ersetzt die Zielkennung in der Dienst-Signalisierungsnachricht SM(GT1) durch diese zugeordnete portierte Teilnehmerkennung GT'. Ist dies nicht der Fall, so verändert er die Zielkennung nicht.

Die portierte Teilnehmerkennung GT' wird wie folgt ermittelt: Besteht die zugeordnete Portierungskennung aus einer Netzkennung oder Betreiberkennung des Zielnetzes der Dienst-Signalisierungsnachricht SM(GT1), so wird diese Kennung der Teilnehmerkennung GT als Präfix vorangestellt und das Präfix und die Teilnehmerkennung GT bilden zusammen die portierte Teilnehmerkennung GT'. Besteht die Portierungskennung aus einer Wegeleitkennung der Zielvermittlungsstelle (auch als "routing number" bezeichnet), an die die Dienst-Signalisierungsnachricht SM(GT1) gerichtet ist, so wird die portierte Teilnehmerkennung GT' von der Wegeleitkennung gebildet. Es ist hier auch möglich, dass die Teilnehmerkennung GT zusätzlich zur Wegeleitkennung eingetragen wird, also beide Kennungen zusammen die portierte Teilnehmerkennung GT' bilden.

Figur 2 zeigt einen Dienst-Signalisierungsnachrichtenfluss zwischen den Vermittlungsstellen SW1 und SW6 über die Signalisierungsknoten STP1 und STP2 sowie den Konvertierungsknoten CP.

Die Ursrprungs-Vermittlungsstelle SW1 erzeugt eine Dienst-Signalisierungsnachricht SM(GT1), die an die Ziel-Vermittungsstelle SW6 gerichtet ist und die Teilnehmerkennung GT1 eines Teilnehmers dieser Vermittlungsstelle als Zielkennung enthält. Ausserdem fügt die Vermittlungsstelle SW1 der Dienst-Signalisierungsnachricht SM(GT1) eine Quell-Teilnehmerkennung GTO1, die dem an die Vermittlungsstelle SW1 angeschlossenen Endgerät T1 zugeordnet ist, sowie eine eindeutige Referenzkennung REF hinzu, welche die Vermittlungsstelle SW1 ausserdem intern abspeichert. Bei der Dienst-Signalisierungsnachricht SM(GT1) handelt es sich beispielsweise um eine erste Dienst-Signalisierungsnachricht einer Dienst-Signalisierungsnachrichtensequenz des oben erläuterten CCBS-Dienstes. Dass es sich bei der Dienst-Signalisierungsnachricht SM(GT1) um eine erste Dienst-Signalisierungsnachricht einer Dienst-Signalisierungsnachrichtensequenz handelt, wird beispielsweise durch eine Kennung TC_BEGIN angezeigt. Die Dienst-Signalisierungsnachricht SM(GT1) wird durch das Signalisierungsnetz von der Vermittlungsstelle SW1 an den Konvertierungsknoten CP geleitet. Dieser ersetzt die Teilnehmerkennung GT1 durch die portierte Teilnehmerkennung GT1', da der zugeordnete Teilnehmer in diesem Ausführungsbeispiel über ein anderes Kommunikationsnetz, das Kommunikationsnetz KN2 erreichbar ist. Die Dienst-Signalisierungsnachricht SM(GT1') mit der portierten Teilnehmerkennung GT1' als Zielkennung wird sodann durch das Signalisierungsnetz zu dem Signalisierungsknoten STP1 geleitet. Dieser erkennt an der Teilnehmerkennung GT1', dass die Dienst-Signalisierungsnachricht SM(GT1') in das Kommunikationsnetz KN2 zu leiten ist und leitet diese Dienst-Signalisierungsnachricht an den Signalisierungsknoten STP2 weiter, der für dieses Kommunikationsnetz zuständig ist. Der Signalisierungsknoten STP2 ergänzt die Teilnehmerkennung GT1' durch die Vermittlungsstellen-Kennung SPC6 der Vermittlungsstelle SW6 innerhalb des Kommunikationsnetzes KN2, der die portierte Teilnehmerkennung GT1' zugeordnet ist, und leitet die Dienst-Signalisierungsnachricht als Dienst-Signalisierungsnachricht SM(GT1', SPC6) weiter. Die Dienst-Signalisierungsnachricht SM(GT1', SPC6) wird dann gemäss der Kennung SPC6 durch das Signalisierungsnetz zur Vermittlungsstelle SW6 geleitet.

Die Vermittlungsstelle SW6 antwortet auf die Dienst-Signalisierungsnachricht SM(GT1', SPC6) mit einer Dienst-Signalisierungsnachricht SM(GTO1, GT1'), die die Referenzkennung REF, eine die Kennung TC_BEGIN ersetzende Kennung TC_CONTINUE sowie die Teilnehmerkennung GTO1 als Ziel-Teilnehmerkennung und die Teilnehmerkennung GT1' als Quell-Teilnehmerkennung enthält. Die Dienst-Signalisierungsnachricht SM(GTO1, GT1') wird zunächst an den Signalisierungsknoten STP2 gesendet, der an der Teilnehmerkennung GTO1 erkennt, dass die Dienst-Signalisierungsnachricht SM(GTO1, GT1') in das Kommunikationsnetz KN1 zu leiten ist. Der Signalisierungsknoten STP2 leitet die Dienst-Signalisierungsnachricht SM(GTO1, GT1') an den Signalisierungsknoten STP1 weiter, der für das Kommunikationsnetz KN1 zuständig ist. Der Signalisierungsknoten STP1 ergänzt die Dienst-Signalisierungsnachricht SM(GTO1, GT1') um den Signalling Point Code SPC1 der Vermittlungsstelle SW1, so dass die Dienst-Signalisierungsnachricht SM(GTO1, GT1'; SPC1) durch das Kommunikationsnetz KN1 zu der Vermittlungsstelle SW1 geroutet werden kann. Anhand der Referenzkennung REF kann die Vermittlungsstelle SW1 erkennen, dass die Dienst-Signalisierungsnachricht SM(GTO1, GT1'; SPC1) eine Antwort auf die Dienst-Signalisierungsnachricht SM(GT1) ist. Die Vermittlungsstelle SW1 ermittelt deshalb die portierte Teilnehmerkennung GT1' aus der Dienst-Signalisierungsnachricht SM(GTO1, GT1'; SPC1) und trägt die Teilnehmerkennung GT1' in eine weitere Dienst-Signalisierungsnachricht SM2(GT1') ein, die die Vermittlungsstelle SW1 als eine weitere Dienst-Signalisierungsnachricht zu der mit der Dienst-Signalisierungsnachricht SM(GT1) begonnenen Dienst-Signalisierungsnachrichtensequenz an die Vermittlungsstelle SW6 versenden muss.

Der Konvertierungsknoten CP braucht selbstverständlich bei der Rücksendung der Antwort von der Vermittlungsstelle SW6 an die Vermittlungsstelle SW1 nicht eingeschaltet zu werden. Erfindungsgemäß wird er nun aber auch bei der weiteren Signalisierung nicht mehr eingeschaltet. Wird er dennoch eingeschaltet, so erkennt er an der Kennung TC CONTINUE, oder, wie weiter unten noch ausgeführt wird, an der Kennung TC_END, daß er die Nachricht ohne inhaltliche Behandlung weitergeben kann.

In der beschriebenen Variante der Erfindung speichert die Vermittlungsstelle SW1 die aus einer Antwort erhaltene portierte Teilnehmerkennung GT1' zusammen mit der Referenzkennung REF ab, so dass die Vermittlungsstelle SW1 die portierte Teilnehmerkennung GT1' noch für weitere Dienst-Signalisierungsnachrichten innerhalb der Dienst-Signalisierungsnachrichtensequenz verwenden kann.

Gemäß einer anderen Variante ist es auch möglich, dass die Vermittlungsstelle SW1 die zu der Teilnehmerkennung GT1 gehörende portierte Teilnehmerkennung GT1' bereits vor dem Versenden einer ersten Dienst-Signalisierungsnachricht bei dem Konvertierungsknoten CP abfragt und bereits diese erste Dienst-Signalisierungsnachricht mit der aktuell gültigen Teilnehmerkennung GT1' versieht. Diese Variante muss zumindest dann angewendet werden, wenn zwar mehrere Signalisierungsnachrichten einander folgen, aber eine Antwort nicht sicher zu erwarten ist oder wenn aus der Antwort nicht sicher Rückschluß auf die portierte Teilnehmerkennung zu erwarten ist.

In dem Beispiel aus Figur 2 sei die Dienst-Signalisierungsnachrichtensequenz mit der Dienst-Signalisierungsnachricht SM2(GT1') beendet. Deshalb trägt die Vermittlungsstelle SW1 in die Dienst-Signalisierungsnachricht SM2(GT1') anstatt der Kennung TC_CONTINUE eine Kennung TC_END ein. Da bereits die aktuell gültige portierte Teilnehmerkennung GT1' in die Dienst-Signalisierungsnachricht SM2(GT1') eingtragen ist, kann diese entweder, wie in Figur 2 dargestellt, direkt zu dem Signalisierungsknoten STP1 geroutet werden oder aber wiederum über den Konvertierungsknoten CP. Da im Ausführunsbeispiel der Konvertierungsknoten CP erfindungsgemäss aufgebaut ist, ermittelt er anhand der Kennung TC_END, dass für die Dienst-Signalisierungsnachricht SM2(GT1') keine portierte Teilnehmerkennung bestimmt werden muss, und sendet die SM2(GT1') ohne weitere Manipulation zu dem Signalisierungsknoten STP1 weiter. Dieser erkennt, dass die Dienst-Signalisierungsnachricht SM2(GT1') in das Kommunikationsnetz KN2 zu leiten ist und leitet diese Dienst-Signalisierungsnachricht an den Signalisierungsknoten STP2 weiter, der für dieses Kommunikationsnetz zuständig ist. Der Signalisierungsknoten STP2 ergänzt die Teilnehmerkennung GT1' durch die Vermittlungsstellen-Kennung SPC6 der Vermittlungsstelle SW6 innerhalb des Kommunikationsnetzes KN2 und leitet die Dienst-Signalisierungsnachricht als Dienst-Signalisierungsnachricht SM2(GT1', SPC6) weiter. Die Dienst-Signalisierungsnachricht SM2(GT1', SPC6) wird dann gemäss der Kennung SPC6 durch das Signalisierungsnetz zur Vermittlungsstelle SW6 geleitet.

Wie in Figur 2 dargestellt, kann das erfindungsgemässe Verfahren bei Portierungen zwischen zwei unterschiedlichen Kommunikationsnetzen angewandt werden. Es ist aber auch möglich, dass ein Teilnehmer von einer Vermittlungsstelle des Kommunikationsnetzes KN1 zu einer anderen Vermittlungsstelle desselben Kommunikationsnetzes portiert worden ist, beispielsweise von der Vermittlungsstelle SW2 zu der Vermittlungsstelle SW3. Auch in diesem Fall wird eine Dienst-Signalisierungsnachricht, die beispielsweise eine Teilnehmerkennung GT2 enthält, zunächst zu dem Konvertierungsknoten CP geleitet, der dann vergleichbar mit dem Beispiel aus Figur 2 die Teilnehmerkennung GT2 in eine Teilnehmerkennung GT2' übersetzt und die Dienst-Signalisierungsnachricht dann an den Signalisierungsknoten STP1 weitersendet. Dieser ergänzt dann die Teilnehmerkennung GT2' um eine Signalling Point Code SPC3, so dass die Dienst-Signalisierungsnachricht an die Vermittlungsstelle SW3 weitergesendet werden kann. Ebenso wie in dem Beispiel aus Figur 2 anstatt der Teilnehmerkennung GT1 die portierte Teilnehmerkennung GT1' für weitere Dienst-Signalisierungsnachrichten der dortigen Dienst-Signalisierungsnachrichtensequenz verwendet wird, wird im aktuellen Beispiel nunmehr die portierte Teilnehmerkennung GT2' für den Dienst-Signalisierungsnachrichtenaustausch zwischen den Vermittlungsstellen SW1 und SW3 verwendet.

Die Abfolgen und auch die Inhalte der einzelnen Signalisierungsnachrichten können auch anders aussehen. Insbesondere werden häufig im Signalisierungsnetz primär die Adressen der Vermittlungsstellen verwendet, während erst von der Ziel-Vermittlungsstelle aus wieder die Teilnehmeradresse verwendet wird. Am grundsätzlichen Ablauf ändert dies aber nichts.

Im gezeigten Beispiel sind die Funktionen des Konvertierungsknotens CP in einen Dienststeuerungsknoten SCP integriert, wie in Figur 1 durch eine strichpunktierte Umfassung angedeutet ist. Der Dienststeuerungsknoten SCP leistet in dem Beispiel aus Figur 1 innerhalb eines Intelligenten Netzes sogenannte Service-Control-Funktionen, in Figur 1 durch einen Funktionsblock SSF dargestellt, die den Spezifikationen der IN-Architektur entsprechen (IN = Intelligent Network, siehe beispielsweise ITU-T Recommendation Q.1215). Weiterhin kann jeweils sowohl in den Konvertierungsknoten CP als auch in den Dienststeuerungsknoten SCP die Portierungs-Datenbank NPDB integriert sein.

Es ist auch möglich, dass der Dienststeuerungsknoten SCP oder der Konvertierungsknoten CP mit den Vermittlungsstellen des Kommunikationsnetzes KN1 nicht gemäss den in den IN Spezifikationen festgelegten Mechanismen kommuniziert. Diese Kommunikation könnte gemäss proprietärer Protokolle oder auch über die Kommunikations-Infrastruktur eines objektorientierten Datenverarbeitungssystems, beispielsweise gemäss der OMG Architektur (OMG = Object Management Group) erfolgen.

Aus den beschriebenen Abläufen ergeben sich für den Fachmann die dafür erforderlichen Mittel ohne weiteres erfinderisches Zutun. In der Regel sind diese Mittel keine Hardwaremittel, sondern entsprechend programmierte Programmsegmente.

## Patentansprüche

1. Verfahren zur Übermittlung von Dienst-Signalisierungsnachrichten (SM(GT1), SM2(GT1')) über ein Signalisierungsnetz zwischen Vermittlungsstellen (SW1, SW2, SW3, SW6), wobei die Dienst-Signalisierungsnachrichten (SM(GT1), SM2(GT1')) in Sequenzen aus mindestens jeweils einer Signalisierungsnachricht übertragen werden können, wobei die Signalisierungsnachrichten (SM(GT1), SM2(GT1')) jeweils anhand einer in der jeweiligen Signalisierungsnachricht eingetragenen Zielkennung (GT1, GT1') von einer Ursprungs-Vermittlungsstelle zu einer Ziel-Vermittlungsstelle geleitet werden und wobei ein Konvertierungsknoten (CP) für eine Teilnehmerkennung (GT1) eines Teilnehmers der Ziel-Vermittlungsstelle, die als Zielkennung in einer Signalisierungsnachricht (SM(GT1)) vorgesehen ist, eine der Teilnehmerkennung (GT1) zugeordnete portierte Teilnehmerkennung (GT1') ermitteln kann, indem der Konvertierungsknoten (CP) auf eine Portierungs-Datenbank (NPDB) zugreift, **dadurch gekennzeichnet**, dass die Ursprungs-Vermittlungsstelle die der Teilnehmerkennung (GT1) zugeordnete portierte Teilnehmerkennung (GT1') ermittelt und dass die Ursprungs-Vermittlungsstelle die der Teilnehmerkennung (GT1) zugeordnete portierte Teilnehmerkennung (GT1') in diejenigen Signalisierungsnachrichten (SM2(GT1')) als Zielkennung einträgt, welche die Ursprungs-Vermittlungsstelle innerhalb einer Sequenz aus Signalisierungsnachrichten anschliessend an eine erste Signalisierungsnachricht (SM(GT1)) versendet.

2. Verfahren nach Anspruch 1, dadurch gekennzeichnet, dass die Ursprungs-Vermittlungsstelle die der Teilnehmerkennung (GT1) zugeordnete portierte Teilnehmerkennung (GT1') aus einer als Antwort auf die erste Signalisierungsnachricht empfangenen Signalisierungsnachricht (SM(GTO1, GT1'; SPC1)) ermittelt.

3. Verfahren nach Anspruch 1, dadurch gekennzeichnet, dass die Ursprungs-Vermittlungsstelle die der Teilnehmerkennung (GT1) zugeordnete portierte Teilnehmerkennung (GT1') bei dem Konvertierungsknoten (CP) abfragt.

4. Verfahren nach Anspruch 1, dadurch gekennzeichnet, dass zumindest eine jeweils erste Signalisierungsnachricht (SM(GT1)) einer Sequenz aus mindestens jeweils einer Signalisierungsnachricht (SM(GT1), SM2(GT1')) über den Konvertierungsknoten (CP) geroutet wird und der Konvertierungsknoten (CP) nur dann, wenn die Signalisierungsnachricht (SM(GT1)) eine erste Signalisierungsnachricht einer Sequenz aus Signalisierungsnachrichten ist, die als Zielkennung in der Signalisierungsnachricht (SM(GT1)) eingetragene Teilnehmerkennung (GT1) eines Teilnehmers der Zielvermittlungsstelle durch eine der Teilnehmerkennung (GT1) zugeordnete portierte Teilnehmerkennung (GT1') ersetzt.

5. Verfahren nach Anspruch 1, dadurch gekennzeichnet, dass die Dienst-Signalisierungsnachricht eine Nachricht (SM(GT1), SM2(GT1')) des SCCP Protokolls darstellt.

6. Verfahren nach Anspruch 1, dadurch gekennzeichnet, dass die Dienst-Signalisierungsnachricht (SM(GT1')) von dem Konvertierungsknoten (CP) an einen Signalisierungsknoten (STP1, STP2, STP3) geleitet wird und dass der Signalisierungsknoten (STP1, STP2, STP3) die Teilnehmerkennung (GT1) oder die portierte Teilnehmerkennung (GT1') durch eine dieser zugeordneten Vermittlungsstellen-Kennung (SPC1, SPC6, SPC3) ergänzt.

7. (Ursprungs-) Vermittlungstelle zur Übermittlung von Dienst-Signalisierungsnachrichten (SM(GT1), SM2(GT1')) über ein Signalisierungsnetz zwischen der (Ursprungs-) Vermittlungstelle und mindestens einer weiteren Ziel-Vermittlungsstelle (SW1, SW2, SW3, SW6), wobei die Dienst-Signalisierungsnachrichten (SM(GT1), SM2(GT1')) in Sequenzen aus mindestens jeweils einer Signalisierungsnachricht übertragen werden können, wobei die Signalisierungsnachrichten (SM(GT1), SM2(GT1')) jeweils anhand einer in der jeweiligen Signalisierungsnachricht eingetragenen Zielkennung (GT1, GT1') von der Ursprungs-Vermittlungsstelle zu der Ziel-Vermittlungsstelle geleitet werden und wobei ein Konvertierungsknoten (CP) für eine Teilnehmerkennung (GT1) eines Teilnehmers der Ziel-Vermittlungsstelle, die als Zielkennung in einer Signalisierungsnachricht (SM(GT1)) vorgesehen ist, eine der Teilnehmerkennung (GT1) zugeordnete portierte Teilnehmerkennung (GT1') ermitteln kann, indem der Konvertierungsknoten (CP) auf eine Portierungs-Datenbank (NPDB) zugreift, **dadurch gekennzeichnet**, dass die Ursprungs-Vermittlungsstelle erste Mittel aufweist, die so ausgestaltet sind, dass die Ursprungs-Vermittlungsstelle die der Teilnehmerkennung (GT1) zugeordnete portierte Teilnehmerkennung (GT1') ermitteln kann, und dass die Ursprungs-Vermittlungsstelle zweite Mittel aufweist, die so ausgestaltet sind, dass die die Ursprungs-Vermittlungsstelle die der Teilnehmerkennung (GT1) zugeordnete portierte Teilnehmerkennung (GT1') in diejenigen Signalisierungsnachrichten SM2(GT1') als Zielkennung eintragen kann, welche die Ursprungs-Vermittlungsstelle innerhalb einer Sequenz aus Signalisierungsnachrichten anschliessend an eine erste Signalisierungsnachricht zum Versenden bereitstellt.

8. Konvertierungsknoten (CP) zur Übermittlung von Dienst-Signalisierungsnachrichten (SM(GT1), SM2(GT1')) über ein Signalisierungsnetz zwischen Vermittlungsstellen (SW1, SW2, SW3, SW6), wobei die Dienst-Signalisierungsnachrichten (SM(GT1), SM2(GT1')) in Sequenzen aus mindestens jeweils einer Signalisierungsnachricht übertragen werden können, wobei die Signalisierungsnachrichten (SM(GT1), SM2(GT1')) jeweils anhand einer in der jeweiligen Signalisierungsnachricht eingetragenen Zielkennung (GT1, GT1') von einer Ursprungs-Vermittlungsstelle zu einer Ziel-Vermittlungsstelle geleitet werden und wobei der Konvertierungsknoten (CP) erste Mittel aufweist, die so ausgestaltet sind, dass der Konvertierungsknoten (CP) für eine Teilnehmerkennung (GT1) eines Teilnehmers der Ziel-Vermittlungsstelle, die als Zielkennung in einer Signalisierungsnachricht (SM(GT1)) vorgesehen ist, eine der Teilnehmerkennung (GT1) zugeordnete portierte Teilnehmerkennung (GT1') ermitteln kann, indem der Konvertierungsknoten (CP) auf eine Portierungs-Datenbank (NPDB) zugreift, **dadurch gekennzeichnet**, dass der Konvertierungsknoten (CP) zweite Mittel aufweist, die so ausgestaltet sind, dass der Konvertierungsknoten (CP) ermitteln kann, ob eine Signalisierungsnachricht eine jeweils erste Signalisierungsnachricht (SM(GT1)) einer Sequenz aus mindestens jeweils einer Signalisierungsnachricht (SM(GT1), SM2(GT1')) ist, und dass der Konvertierungsknoten (CP) dritte Mittel aufweist, die so ausgestaltet sind, dass der Konvertierungsknoten (CP) bei der jeweils ersten Signalisierungsnachricht (SM(GT1)) die als Zielkennung eingetragene Teilnehmerkennung (GT1) eines Teilnehmers der Ziel-Vermittlungsstelle durch eine der Teilnehmerkennung (GT1) zugeordnete portierte Teilnehmerkennung (GT1') ersetzen kann.

9. Dienststeuerungsknoten (SCP) zur Übermittlung von Dienst-Signalisierungsnachrichten (SM(GT1), SM2(GT1')) über ein Signalisierungsnetz zwischen Vermittlungsstellen (SW1, SW2, SW3, SW6), wobei die Dienst-Signalisierungsnachrichten (SM(GT1), SM2(GT1')) in Sequenzen aus mindestens jeweils einer Signalisierungsnachricht übertragen werden können, wobei die Signalisierungsnachrichten (SM(GT1), SM2(GT1')) jeweils anhand einer in der jeweiligen Signalisierungsnachricht eingetragenen Zielkennung (GT1, GT1') von einer Ursprungs-Vermittlungsstelle zu einer Ziel-Vermittlungsstelle geleitet werden und wobei der Dienststeuerungsknoten (SCP) erste Mittel aufweist, die so ausgestaltet sind, dass der Dienststeuerungsknoten (SCP) für eine Teilnehmerkennung (GT1) eines Teilnehmers der Ziel-Vermittlungsstelle, die als Zielkennung in einer Signalisierungsnachricht (SM(GT1)) vorgesehen ist, eine der Teilnehmerkennung (GT1) zugeordnete portierte Teilnehmerkennung (GT1') ermitteln kann, indem der Dienststeuerungsknoten (SCP) auf eine Portierungs-Datenbank (NPDB) zugreift, **dadurch gekennzeichnet**, dass der Dienststeuerungsknoten (SCP) zweite Mittel aufweist, die so ausgestaltet sind, dass der Dienststeuerungsknoten (SCP) ermitteln kann, ob eine Signalisierungsnachricht (SM(GT1)) eine jeweils erste Signalisierungsnachricht einer Sequenz aus mindestens jeweils einer Signalisierungsnachricht (SM(GT1), SM2(GT1')) ist, und dass der Dienststeuerungsknoten (SCP) dritte Mittel aufweist, die so ausgestaltet sind, dass der Konvertierungsknoten (CP) bei der jeweils ersten Signalisierungsnachricht (SM(GT1)) die als Zielkennung eingetragene Teilnehmerkennung (GT1) eines Teilnehmers der Ziel-Vermittlungsstelle durch eine der Teilnehmerkennung (GT1) zugeordnete portierte Teilnehmerkennung (GT1') ersetzen kann.
